# EUROPEAN PATENT SPECIFICATION

(11) **EP 2 533 475 B1**
(45) Date of publication and mention of the grant of the patent: **03.01.2018**
(21) Application number: 10847287.9
(22) Date of filing: 12.11.2010
(51) Int. Cl.: H04L 12/437, H04L 12/46, H04L 29/12, H04L 12/721, H04L 12/751

(54) **METHOD AND SYSTEM FOR HOST ROUTE REACHABILITY IN PACKET TRANSPORT NETWORK ACCESS RING**
VERFAHREN UND SYSTEM FÜR HOST-ROUTENERREICHBARKEIT IN EINEM ZUGANGSRING EINES PAKETTRANSPORTNETZWERKES
PROCÉDÉ ET SYSTÈME POUR L'ACCESSIBILITÉ DE ROUTE HÔTE DANS UNE BOUCLE D'ACCÈS DE RÉSEAU DE TRANSPORT PAR PAQUETS

(30) Priority: 11.03.2010 CN 201010122773
(43) Date of publication of application: 12.12.2012
(73) Proprietor: ZTE Corporation, Shenzhen, Guangdong 518057 (CN)
(72) Inventor: LI, Wei, Shenzhen Guangdong 518057 (CN); LIU, Daofeng, Shenzhen Guangdong 518057 (CN)
(74) Representative: J A Kemp
(86) International application number: PCT/CN2010/078661
(87) International publication number: WO 2011/110029

(56) References cited:
- CN-A- 101 072 238
- CN-A- 101 771 618
- CN-C- 1 315 299
- US-A1- 2002 046 271
- US-A1- 2006 039 385
- US-A1- 2008 247 399
- MA LIN ET AL.: 'Development and Application Discussion for PTN Technique' TELECOMMUNICATION NETWORK TECHNOLOGY no. 10, October 2008, pages 25 - 29, XP008162435

## Description

### TECHNICAL FIELD

The disclosure relates to Packet Transport Network (PTN) technology, in particular to a method and a system for realizing reachablity of a host route in an access ring of a PTN.

### BACKGROUND

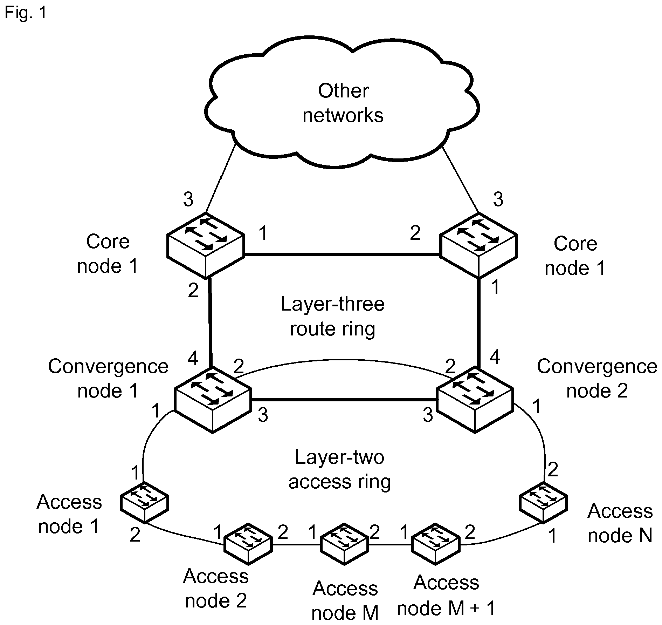

In current various PTNs, such as telecommunication networks and enterprise networks, an access ring model is generally adopted in order to ensure that a service will not be interrupted on downlink nodes due to a single-node failure.. Specifically, Fig. 1 is a diagram showing the topological structure of an access ring model in a PTN, as shown in Fig. 1, a layer-two ring network is formed by interconnection among nodes in a layer-two access ring and a heartbeat wire between convergence nodes 1 and 2; wherein each node in the layer-two access ring is configured with one host address, and the host address is in the same network segment with a layer-three interface address of a node connected with a layer-three route ring. For example, as shown in Fig. 1, two ports of convergence node 1 which are connected with the layer-two access ring are configured in a Virtual Local Area Network (VLAN) 100 and the VLAN 100 is configured with a layer-three address 100.1.1.253/24, while two ports of convergence node 2 which are connected with the layer-two access ring are configured in a VLAN100 and the VLAN 100 is configured with a layer-three address 100.1.1.254/24; node 1 of the layer-two access ring is configured with a VLAN100 and a layer-three address 100.1.1.1/24, and node 2 of the layer-two access ring is configured with a VLAN100 and a layer-three address 100.1.1.2/24, and so on, access node N is configured with a VLAN100 and a layer-three address 100.1.1.N/24.

Before the use of the PTN, it is further required to complete the following operation:
a Spanning Tree Protocol (STP) is initiated at access nodes of the layer-two access ring, and STP transparent transmission is started at convergence nodes 1 and 2 of the layer-two access ring; when the access nodes of the layer-two access ring are connected, a loop is blocked by the STP to ensure that no broadcast storm occur in the layer-two access ring, wherein the broadcast storm means that data messages are forwarded circularly and constantly in the layer-two access ring to form a storm and occupy the whole bandwidth of the link;
Dual-gateway default routes are configured on all the access nodes of the layer-two access ring, thus information can be uplinked to the convergence nodes and then uplinked to a core node in a convergence ring and other networks through the two convergence nodes; and
layer-three interface interconnection is configured and a layer-three route protocol is initiated at nodes of the layer-three route ring, wherein direct routes and static routes are re-configured on convergence nodes 1 and 2 connected with the layer-two access ring in a dynamic route protocol.

As can be seen from Fig. 1, when breaks happen to links between the access nodes of the layer-two access ring or to the heartbeat wire between convergence nodes 1 and 2, all the access nodes of the layer-two access ring can smoothly access a convergence node, a core node and other networks. However, when disconnection happens to links between the access nodes of the layer-two access ring and to the heartbeat wire between convergence nodes 1 and 2 at the same time, since the interfaces of convergence nodes 1 and 2 connected with the layer-two access ring are configured with two addresses in the same network segment, only one of the routes computed by the core node and other networks by the dynamic route protocol is selected. Accordingly, the route can only reach one of the convergence nodes, i.e., convergence node 1 or 2; and in this way, the core node and other networks have no route to all the access nodes associated with the other convergence node, therefore all the access nodes associated with the other convergence node cannot normally communicate with the core node and other networks.

US 2006/0039385 discloses routing a packet by router aggregation. A packet is received from outside the aggregation by an initially receiving router/ switch unit. Router functions are performed by the initially receiving router unit, including modification of the packet. The packet is then sent to a layer 2 network of the aggregation, wherein switching functions are performed on the packet. Also disclosed is cooperative aggregation of router/switch units. The aggregation includes a plurality of the router/switch units, and a switching network interconnecting the units. The cooperative aggregation functions as a single router from a perspective of an external network device coupled to the system.

US 2002/0046271 discloses stack configuration for interconnecting networks. Software is executed in each internetworking device such that the stack of internetworking devices appear as a single internetworking device to the interconnected networks.

### SUMMARY

In view of this, Embodiments herein provide a method and a system for realizing reachability of a host route in an access ring of a PTN.

The features of the method and system according to the present disclosure are defined in the independent claims, and the preferable features according to the present invention are defined in the dependent claims.

By the method and system for realizing reachablity of a host route in an access ring of a PTN, when disconnection happens to links between access nodes of the access ring and to the heartbeat wire between the convergence nodes at the same time, the core node and other networks still have a route to all the access nodes associated with the other convergence node, so that all the access nodes associated with the other convergence node can normally communicate with the core node and other networks, thereby improving the capability of the access nodes in the PTN to resist a fault.

### BRIEF DESCRIPTION OF THE DRAWINGS

Fig. 1 is a diagram showing the topological structure of an access ring model of a PTN;
Fig. 2 is a schematic diagram showing a flow of a method for realizing reachablity of a host route in an access ring of a PTN of the disclosure;
Fig. 3 is a schematic diagram showing a flow of a method configured before the use of a PTN;
Fig. 4 is a schematic diagram showing a flow of a method for implementing embodiment 1;
Fig. 5 is a schematic diagram showing a flow of a method for implementing embodiment 2; and
Fig. 6 is a schematic diagram showing the structure of a system for realizing reachablity of a host route in an access ring of a PTN of the disclosure.

### DETAILED DESCRIPTION

The disclosure is further described below in conjunction with the drawings and specific embodiments in detail.

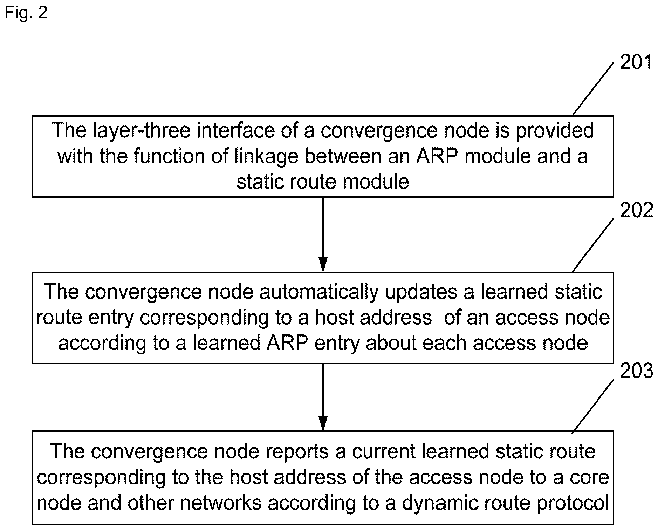

As shown in Fig. 2, the method for realizing reachablity of a host route in an access ring of a PTN includes the following steps.

Step 201: A function of linkage between an ARP module and a static route module is set at a layer-three interface of a convergence node.

Here, the layer-three interface of the convergence node may be provided with a switch for the linkage between the ARP module and the static route module, and the linkage function can be realized after the switch is turned on.

The linkage function is realized specifically as follows: after learning an ARP entry about an access node, the ARP module automatically sends a message related to the learned ARP entry about the access node to the static route module; and the static route module sets a corresponding static route entry corresponding to a host address of the access node according to the ARP entry in the message after receiving the message.

Step 202: The convergence node automatically updates a learned static route entry corresponding to the host address of the access node according to a learned ARP entry about each access node.

Here, taking the diagram showing the topological structure of an access ring model of a PTN in Fig. 1 as an example, convergence node 1 adds a static route entry corresponding to 100.1.1.1/32 to its own static route table after learning an ARP entry corresponding to 100.1.1.1 of access node 1, where 32 represents a mask of 32 bits; and the convergence node 1 learning the ARP entry corresponding to 100.1.1.1 of access node 1 means that the ARP entry corresponding to 100.1.1.1 of access node 1 exists in an ARP cache table in the ARP module of convergence node 1.

In application, the convergence node automatically updates a learned static route entry corresponding to a host address of an access node in real time according to a learned ARP entry about each access node.

The learned ARP entry about each access node refers to an ARP entry about each access node which is in the same network segment with the layer-three interface of the convergence node; the ARP module of the convergence node first detects whether a layer-three interface in a to-be-learned ARP entry about an access node is in the same network segment with the layer-three interface of the convergence node, if they are in the same network segment, then the ARP entry is learned, otherwise, the ARP entry about the access node is discarded.

Step 203: The convergence node reports a current learned static route entry corresponding to the host address of the access node to a core node and other networks according to a dynamic route protocol.

Here, after the core node and other networks receive the report, the convergence node, core node and other networks update corresponding dynamic route entries in their respective dynamic route tables.

The convergence node may send a message of the current learned static route entry corresponding to the host address of the access node to the core node and other networks to report the static route to them.

The convergence node reports the static route entry corresponding to the host address of the access node to the core node and other networks in real time according to the dynamic route protocol, therefore, when disconnection happens to links between the access nodes of the access ring and to the heartbeat wire between the convergence nodes at the same time, the core node and other networks can also have a route to all the access nodes associated with the other convergence node, so that all the access nodes associated with the other convergence node can normally communicate with the core node and other networks.

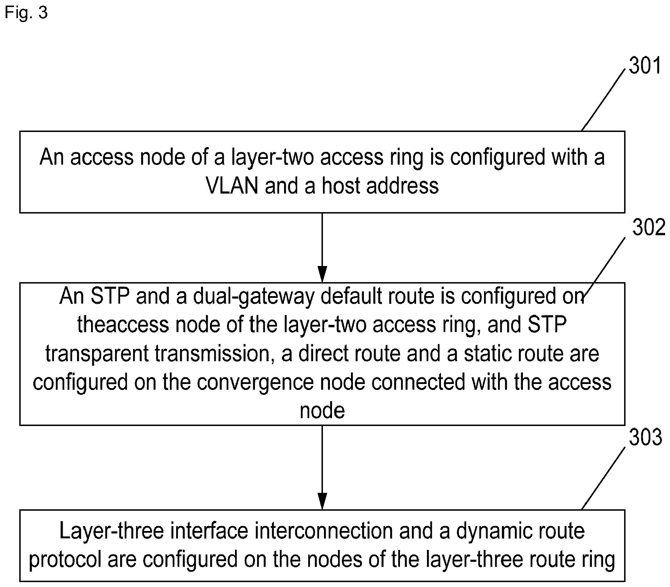

Before Step 201, as shown in Fig. 3, the method further includes the following steps.

Step 301: An access node of the layer-two access ring is configured with a VLAN and a host address, and then Step 302 is executed.

Here, configuring a host address is configuring a layer-three address, and a configured layer-three address and a layer-three interface address of a node connected with a layer-three route ring are in the same network segment. For example, as shown in Fig. 1, two ports of convergence node 1 which are connected with a layer-two access ring are configured in a VLAN 100 and the VLAN 100 has a layer-three address 100.1.1.253/24, while two ports of convergence node 2 which are connected with the layer-two access ring are configured in a VLAN100 and the VLAN 100 has a layer-three address 100.1.1.254/24; node 1 of the layer-two access ring is configured with VLAN100 and with a layer-three address 100.1.1.1/24, and node 2 of the layer-two access ring is configured with VLAN100 and a layer-three address: 100.1.1.2/24, and so on, access node N is configured with VLAN100 and a layer-three address: 100.1.1.N/24.

Step 302: an STP and a dual-gateway default route are configured on the access nodes of the layer-two access ring, and STP transparent transmission, direct routes and static routes are configured on the convergence nodes connected with the access nodes; and then Step 303 is executed.

Here, configuring a dual-gateway default route means configuring two default routes, i.e., two convergence nodes, and the function of the default routes lies in: if no route matched with a destination address is found in a route table of an access node, the access node sends a data packet to the two convergence nodes.

The direct route may be specifically configured to report a local network segment to other nodes by the dynamic route protocol; and
the static route is to allocate a fixed Internet Protocol (IP) address to a Media Access Control (MAC) address corresponding to a node to guide transmission of message data.

Step 303: The layer-three interface interconnection and the dynamic route protocol are configured on the nodes of the layer-three route ring.

Here, the nodes of the layer-three route ring include: convergence nodes, a core node and other networks, wherein the other networks may be a mobile network, or Internet or the like; and the dynamic route protocol is specifically used for automatically computing an optimal path for data transmission by exchanging information among the nodes of the layer-three route ring and according to the function provided by the dynamic route protocol, so as to obtain a dynamic route table.

In the PTN, the converge node learns an ARP entry about each access node in real time according to the connection condition of the access nodes of the access ring, therefore, there may be two circumstances: adding or deleting a host route.

### Embodiment 1

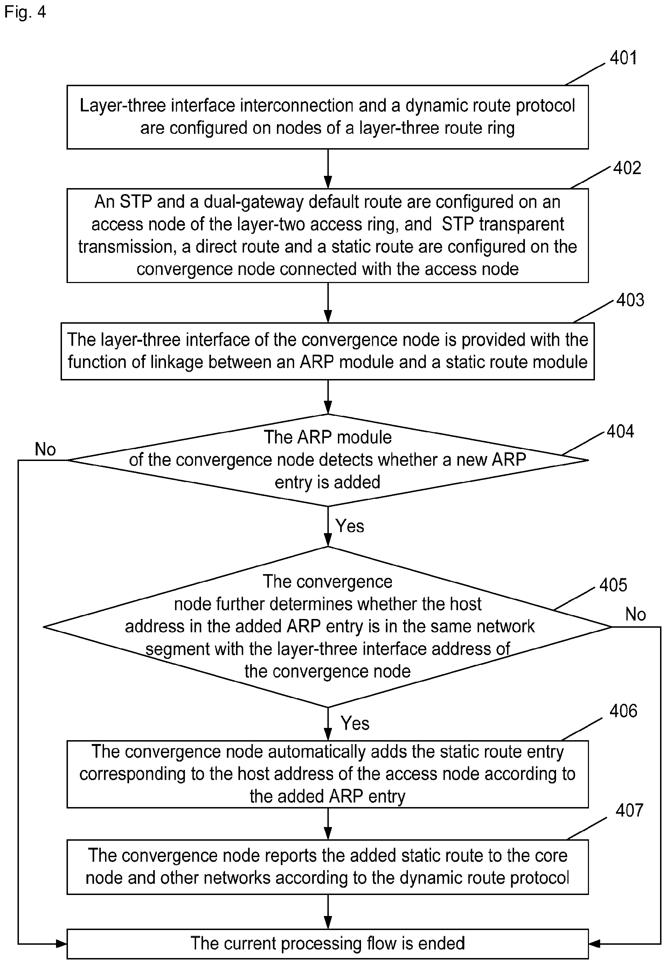

For the case of adding a host route, the embodiment describes a process of giving a report to a core node and other networks by a convergence node, the implementation of which is as shown in Fig. 4, including the following steps.

Step 401: Layer-three interface interconnection and a dynamic route protocol are configured on nodes of a layer-three route ring, and then Step 402 is executed.

Here, the nodes of the layer-three route ring include: convergence nodes, a core node and other networks, wherein said other networks may be a mobile network, Internet or the like.

Step 402: An STP and a dual-gateway default route is configured on an access node of a layer-two access ring, and STP transparent transmission, a direct route and a static route are configured on a convergence node connected with the access nodes; and then Step 403 is executed.

Step 403: The function of linkage between an ARP module and a static route module are set at layer-three interfaces of the convergence nodes, and then Step 404 is executed.

Step 404: The ARP module of the convergence node detects whether a new ARP entry is added, if there is a newly added ARP entry, Step 405 is executed, otherwise, the current processing flow is ended.

Here, the access node sends an ARP request to the convergence node after being connected to the PTN, and then the convergence node returns a corresponding ARP response to the access node and adds a corresponding ARP entry in its own ARP cache table after receiving the ARP request, and when the ARP module finds there is an added ARP entry in the ARP cache table, Step 405 is executed.

Step 405: The convergence node further determines whether the host address in the added ARP entry and the layer-three interface address of the convergence node are in the same network segment, when it is determined they are in the same network segment, Step 406 is executed, otherwise, the current processing flow is ended.

Here, the process of determining whether the host address in the added ARP entry and the layer-three interface address of the convergence node are in the same network segment is: determining whether the host IP address in the added ARP entry is the same as that of the layer-three interface of the convergence node, if they are same, then it is determined they are in the same network segment, and Step 406 is executed, otherwise, the current processing flow is ended.

For example, if a host IP address of an access node is 100.1.1.1/24, and an IP address of a layer-three interface of a convergence node is 100.1.1.253/24, it is considered that the IP address of the host of the access node is the same as that of the layer-three interface of the convergence node; and if the IP address of the access node is 200.1.1.1/24, and the IP address of the layer-three interface of the convergence node is 100.1.1.253/24, it is considered that the IP address of the host of the access node is different from that of the layer-three interface of the convergence node.

Only a host address of an access node which is in the same network segment with a layer-three interface address of a convergence node can be learned by the convergence node, that is to say, only a host address of an access node in the same network segment can be added to an ARP entry in the ARP cache table of the convergence node. Generally, a host address of an access node which is not in the same network segment with a layer-three interface address of a convergence node can never be learned by the convergence node; and this step is executed so as to ensure that a host address added to an ARP entry is in the same network segment with a layer-three interface address of a convergence node.

Step 406: The convergence node automatically adds the static route entry corresponding to the host address of the access node according to the newly added ARP entry, and then Step 407 is executed.

Step 407: The convergence node reports the added static route to the core node and other networks according to the dynamic route protocol, and then the current processing flow is ended.

Here, the convergence node may send a message of the added static route entry corresponding to the host address of the access node to the core node and other networks to report the static route to them.

After the core node and other networks receive the report, the convergence node, core node and other networks add dynamic route entries corresponding to the static route in their respective dynamic route tables.

### Embodiment 2

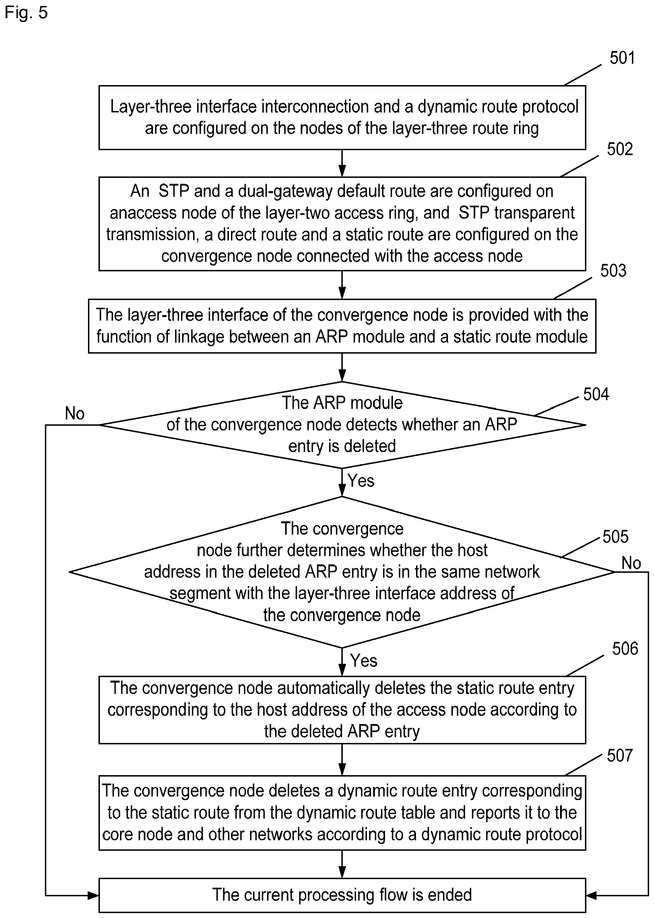

For the case of deleting a host route, the embodiment describes a process of giving a report to a core node and other networks by a convergence node, the implementation of which is as shown in Fig. 5, including the following steps.

Step 501: Layer-three interface interconnection and a dynamic route protocol are configured on nodes of a layer-three route ring, and then Step 502 is executed.

Here, the nodes of the layer-three route ring include: convergence nodes, a core node and other networks, wherein said other networks may be a mobile network, Internet or the like.

Step 502: An STP and a dual-gateway default route are configured on an access node of a layer-two access ring, and STP transparent transmission, a direct route and a static route are configured on a convergence node connected with the access node; and then Step 503 is executed.

Step 503: The layer-three interface of the convergence node is provided with a function of linkage between an ARP module and a static route module, and then Step 504 is executed.

Step 504: The ARP module of the convergence node detects whether an ARP entry is deleted, if an ARP entry is deleted, Step 505 is executed, otherwise, the current processing flow is ended.

Here, the ARP module of the convergence node sets an aging timer for each ARP entry in an ARP cache table, and the timer is triggered when an ARP entry is not used within a certain period of time, generally within 30s. After such a period of time expires, the convergence node sends an ARP request to an access node, and then the ARP module deletes the ARP entry in the ARP cache table if the convergence node does not receive an ARP response from the access node, and then Step 505 is executed. In general, the duration of the timer is 15 to 20 minutes.

Step 505: The convergence node further determines whether a host address in the deleted ARP entry is in the same network segment with a layer-three interface address of the convergence node, if they are in the same network segment, then Step 506 is executed, otherwise, the current processing flow is ended.

Here, the process of determining whether the host address in the deleted ARP entry is in the same network segment with the layer-three interface address of the convergence node is: determining whether the IP address of the host in the deleted ARP entry is the same as that of the layer-three interface of the convergence node, if they are same, then it is determined they are in the same network segment, and Step 506 is executed, otherwise, the current processing flow is ended.

For example, if a host IP address of an access node is 100.1.1.1/24, and the IP address of the layer-three interface of the convergence node is 100.1.1.253/24, it is considered that the host IP address of the access node is the same as that of the layer-three interface of the convergence node; and if the IP address of the access node is 200.1.1.1/24, and the IP address of the layer-three interface of the convergence node is 100.1.1.253/24, it is considered that the host IP address of the access node is different from that of the layer-three interface of the convergence node.

Only a host address of an access node which is in the same network segment with a layer-three interface address of a convergence node can be learned by the convergence node, that is to say, only a host address of an access node in the same network segment can be added to an ARP entry in the ARP cache table of the convergence node. Generally, a host address of an access node which is not in the same network segment with a layer-three interface address of a convergence node can never be learned by the convergence node; and this step aims to ensure that the host address in the deleted ARP entry is in the same network segment with the layer-three interface address of the convergence node.

Step 506: The convergence node automatically deletes a static route entry corresponding to the host address of the access node according to the deleted ARP entry, and then Step 507 is executed.

And Step 507: The convergence node deletes a dynamic route entry corresponding to the static route from a dynamic route table and reports it to the core node and other networks according to the dynamic route protocol, and then the current processing flow is ended.

Here, the convergence node may send a message of the deleted static route entry corresponding to the host address of the access node to the core node and other networks to report the static route to them.

The core node and other networks delete dynamic route entries corresponding to the static route from their respective dynamic route tables after receiving the report.

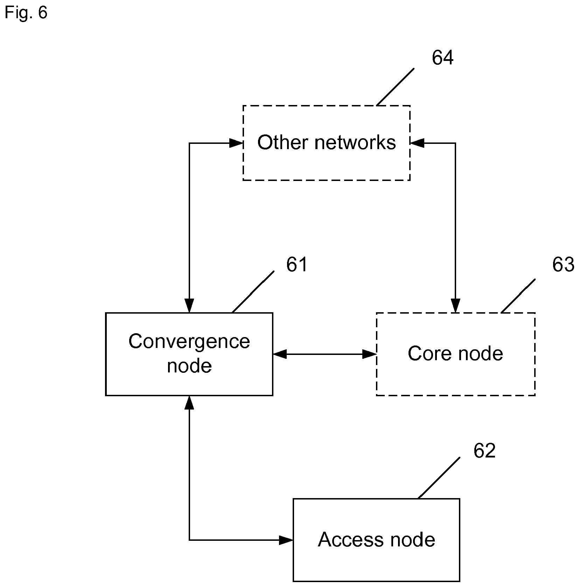

To implement the method, as shown in Fig. 6, the disclosure further provides a system for realizing reachablity of a host route in an access ring of a PTN, including: a convergence node 61 and an access node 62, wherein
the convergence node 61 is configured to automatically update a learned static route entry corresponding to a host address of the access node according to a learned ARP entry about each access node, and report a current learned static route entry corresponding to the host address of the access node to a core node and other networks according to a dynamic route protocol;
here, the layer-three interface of the convergence node 61 is provided with a function of linkage between an ARP module and a static route module.

It should be noted that there may be at least two convergence nodes 61.

The access node 62 is configured to be learned by the convergence node 61 the ARP entry.

Here, it should be noted that there may be at least two access nodes.

The system may further include a core node 63 and other networks 64, wherein the core node 63 is configured to receive the current learned static route entry corresponding to the host address of the access node reported by the convergence node 61, according to the dynamic route protocol.

Here, it should be noted that there may be at least one core node 63.
the other networks 64 are configured to receive the current learned static route entry corresponding to the host address of the access node reported by the convergence node 61, according to the dynamic route protocol.

The convergence node 61 is further configured to:
an ARP module of the convergence node 61 detects whether a new ARP entry is added or an ARP entry is deleted, if an ARP entry is detected to be added or deleted, the convergence node 61 further determines whether the host address in the added or deleted ARP entry and a layer-three interface address of the convergence node are in a same network segment, if it is determined they are in the same network segment, the convergence node automatically adds or deletes a static route entry corresponding to the host address of the access node according to the added ARP entry and reports it to the core node 63 and the other networks 64 according to the dynamic route protocol.

The convergence node 61 is further configured with STP transparent transmission, a direct route and a static route, and still further configured with layer-three interface interconnection and the dynamic route protocol;
the access node 62 is further configured with a VLAN and a host address, as well as an STP and a gateway default route;
the core node 63 is further configured with layer-three interface interconnection and the dynamic route protocol; and
the other networks 64 are further configured with layer-three interface interconnection and the dynamic route protocol.

The convergence node 61 is further configured to update a corresponding dynamic route entry in a dynamic route table after the core node 63 and the other networks 64 receive the report;
the core node 63 is further configured to update a corresponding dynamic route entry in a dynamic route table after the other networks 64 and the core node 63 itself receive the report; and
the other networks 64 are further configured to update corresponding dynamic route entries in dynamic route tables after the core node 63 and the other networks 64 themselves receive the report.

## Claims

1. A method for realizing reachability of a host route in an access ring of a Packet Transport Network, PTN, **characterised in that** a layer-two ring network is formed by interconnection among at least two access nodes (62) in a layer-two access ring and a heartbeat wire between at least two convergence nodes (61), wherein each access node (62) in the layer-two access ring is configured with one host address in a same network segment with a layer-three interface address of a node connected with a layer-three route ring, which comprises the at least two convergence nodes (61), a core node (63), and other networks (64); a Spanning Tree Protocol, STP, is configured at the at least two access nodes (62) of the layer-two access ring, and STP transparent transmission is configured at the at least two convergence nodes (61) of the layer-two access ring; dual-gateway default routes are configured at the at least two access nodes (62) of the layer-two access ring, for information uplink to the at least two convergence nodes (61) and then to the core node (63) and the other networks (64) through the at least two convergence nodes (61); layer-three interface interconnection and a layer-three route protocol are configured at nodes of the layer-three route ring; and direct routes and static routes are re-configured at the at least two convergence nodes (61) connected with the layer-two access ring in a dynamic route protocol;
and that the method comprises:
setting a function of linkage between an Address Resolution Protocol, ARP, module and a static route module at a layer-three interface of each of the at least two convergence nodes (61) (201, 403, 503);
automatically updating a learned static route entry corresponding to a host address of an access node (62) by the each of the at least two convergence nodes (61) in real time according to a learned ARP entry about each access node (62) (202); and,
reporting, by the each of the at least two convergence nodes (61) according to a dynamic route protocol, a current learned static route entry corresponding to the host address of the access node (62) to the core node (63) and the other networks (64) (203, 407, 507),
wherein the setting the function of linkage between the ARP module and the static route module at the layer-three interface of the each of the at least two convergence nodes (61), and automatically updating the learned static route entry corresponding to the host address of the access node (62) by the each of the at least two convergence nodes (61) in real time according to the learned ARP entry about the each access node (62) comprises:
detecting, by the ARP module of the each of the at least two convergence nodes (61), whether a layer-three interface in an ARP entry about an access node (62) is in the same network segment with the layer-three interface of the each of the at least two convergence nodes (61), and in response to detecting that the two layer-three interfaces are in the same network segment, learning the ARP entry;
after learning the ARP entry about the access node (62), automatically sending, by the ARP module, a message related to the ARP entry about the access node (62) to the static route module, wherein the access node (62) is in the same network segment with the layer-three interface of the each of the at least two convergence nodes; and
setting, by the static route module, the static route entry corresponding to the host address of the access node (62) according to the ARP entry in the message after receiving the message.

2. The method according to claim 1, further comprising: updating, by the at least two convergence nodes (61), the core node (63) and the other networks (64), corresponding dynamic route entries in their respective dynamic route tables, after the core node (63) and the other networks (64) receive the report.

3. The method according to claim 1, wherein the automatically updating a learned static route entry corresponding to a host address of an access node (62) by the each of the at least two convergence nodes (61) in real time according to a learned ARP entry about each access node (62) is:
detecting, by the ARP module of the each of the at least two convergence nodes (61), whether a new ARP entry is added (404); when there is a newly added ARP entry, further determining, by the each of the at least two convergence nodes (61), whether a host address in the newly added ARP entry and a layer-three interface address of the each of the at least two convergence nodes (61) are in a same network segment (405); when it is determined they are in the same network segment, automatically adding, by the each of the at least two convergence nodes (61) according to the newly added ARP entry, the static route entry corresponding to the host address of the access node (62) (406).

4. The method according to claim 1, wherein the automatically updating a learned static route entry corresponding to a host address of an access node (62) by the each of the at least two convergence nodes (61) in real time according to a learned ARP entry about each access node (62) is:
detecting, by the ARP module of the each of the at least two convergence nodes (61), whether an ARP entry is deleted (504); when an ARP entry is deleted, further determining, by the each of the at least two convergence nodes (61), whether a host address in the deleted ARP entry and a layer-three interface address of the each of the at least two convergence nodes (61) are in a same network segment (505); when it is determined they are in the same network segment, automatically deleting, by the each of the at least two convergence nodes (61) according to the deleted ARP entry, the static route entry corresponding to the host address of the access node (62)(506).

5. A system for realizing reachablility of a host route in an access ring of a Packet Transport Network, PTN, **characterised in that** the system comprises: at least two convergence nodes (61) and at least two access nodes (62), wherein a layer-two ring network is formed by interconnection among the at least two access nodes (62) in a layer-two access ring and a heartbeat wire between the at least two convergence nodes (61), wherein each access node (62) in the layer-two access ring is configured with one host address in a same network segment with a layer-three interface address of a node connected with a layer-three route ring, which comprises the at least two convergence nodes (61), a core node (63), and other networks (64); a Spanning Tree Protocol, STP, is configured at the at least two access nodes (62) of the layer-two access ring, and STP transparent transmission is configured at the at least two convergence nodes (61) of the layer-two access ring; dual-gateway default routes are configured at the at least two access nodes (62) of the layer-two access ring, for information uplink to the at least two convergence nodes (61) and then to the core node (63) and the other networks (64) through the at least two convergence nodes (61); layer-three interface interconnection and a layer-three route protocol are configured at nodes of the layer-three route ring; and direct routes and static routes are re-configured at the at least two convergence nodes (61) connected with the layer-two access ring in a dynamic route protocol,
wherein each of the at least two convergence nodes (61) is configured for:
setting a function of linkage between an Address Resolution Protocol, ARP, module and a static route module at a layer-three interface of each of the at least two convergence nodes (61);
automatically updating a learned static route entry corresponding to a host address of an access node (62) in real time according to a learned ARP entry about each access node (62), and
reporting, according to a dynamic route protocol, a current learned static route entry corresponding to the host address of the access node (62) to the core node (63) and the other networks (64),
wherein the each of the at least two convergence nodes (61) is configured for setting the function of linkage between the ARP module and the static route module at the layer-three interface of the each of the at least two convergence nodes (61), and automatically updating the learned static route entry corresponding to the host address of the access node (62) in real time according to the learned ARP entry about the each access node (62) by:
detecting, by the ARP module of the each of the at least two convergence nodes (61), whether a layer-three interface in an ARP entry about an access node (62) is in the same network segment with the layer-three interface of the each of the at least two convergence nodes (61), and in response to detecting that the two layer-three interfaces are in the same network segment, learning the ARP entry;
after learning the ARP entry about the access node (62), automatically sending, by the ARP module, a message related to the ARP entry about the access node (62) to the static route module, wherein the access node (62) is in the same network segment with the layer-three interface of the each of the at least two convergence nodes; and
setting, by the static route module, the static route entry corresponding to the host address of the access node (62) according to the ARP entry in the message after receiving the message.

6. The system according to claim 5, further comprising the core node (63) and the other networks (64), wherein
the core node (63) is configured for receiving the current learned static route entry corresponding to the host address of the access node (62) reported by the each of at least two convergence nodes (61), according to the dynamic route protocol; and
the other networks (64) are configured for receiving the current learned static route entry corresponding to the host address of the access node (62) reported by the each of the at least two convergence nodes (61), according to the dynamic route protocol.

7. The system according to claim 6, wherein the core node (63) comprises at least one core node (63).

8. The system according to claim 7, wherein
the each of the at least two convergence nodes (61) is further configured for updating a corresponding dynamic route entry in a dynamic route table after the core node (63) and the other networks (64) receive the report;
the core node (63) is further configured for updating a corresponding dynamic route entry in a dynamic route table after the other networks (64) and the core network itself receive the report; and
the other networks (64) are further configured for updating corresponding dynamic routes entry in dynamic route tables after the core node (63) and the other networks (64) themselves receive the report.

9. The system according to any one of claims 5 to 8, wherein the each of the at least two convergence nodes (61) is further configured for:
after the ARP module of the each of the at least two convergence nodes (61) detects whether a new ARP entry is added or an ARP entry is deleted and an ARP entry is detected to be added or deleted, determining whether a host address in the added or deleted ARP entry and a layer-three interface address of the each of the at least two convergence nodes (61) are in a same network segment; and when it is determined they are in the same network segment, automatically adding or deleting the static route entry corresponding to the host address of the access node (62).

## Patentansprüche

1. Verfahren zum Realisieren der Erreichbarkeit einer Hostroute in einem Zugangsring eines Pakettransportnetzwerks, PTN, **dadurch gekennzeichnet, dass** ein Layer-2-Ringnetzwerk durch Verbindung zwischen mindestens zwei Zugangsknoten (62) in einem Layer-2-Zugangsring und einem Heartbeat-Kabel zwischen mindestens zwei Konvergenzknoten (61) gebildet ist, wobei jeder Zugangsknoten (62) im Layer-2-Zugangsring mit einer Hostadresse in einem gleichen Netzwerksegment mit einer Layer-3-Schnittstellenadresse eines Knotens konfiguriert ist, der mit einem Layer-3-Routenring verbunden ist, der die mindestens zwei Konvergenzknoten (61), einen Kernknoten (63) und andere Netzwerke (64) umfasst; ein Spanning-Tree-Protokoll, STP, an den mindestens zwei Zugangsknoten (62) des Layer-2-Zugangsrings konfiguriert ist, und eine STP-transparente Übertragung an den mindestens zwei Konvergenzknoten (61) des Layer-2-Zugangsrings konfiguriert ist; Dual-Gateway-Standardrouten an den mindestens zwei Zugangsknoten (62) des Layer-2-Zugangsrings zum Informations-Uplink zu den mindestens zwei Konvergenzknoten (61) und dann zum Kernknoten (63) und den anderen Netzwerken (64) durch die mindestens zwei Konvergenzknoten (61) konfiguriert sind; eine Layer-3-Schnittstellen-Verbindung und ein Layer-3-Routenprotokoll an Knoten des Layer-3-Routenrings konfiguriert sind; und direkte Routen und statische Routen an den mindestens zwei Konvergenzknoten (61) in Verbindung mit dem Layer-2-Zugangsring in einem dynamischen Routenprotokoll neu konfiguriert werden;
und dass das Verfahren umfasst:
Einstellen einer Verknüpfungsfunktion zwischen einem Address Resolution Protocol, ARP, -Modul, und einem statischen Routenmodul an einer Layer-3-Schnittstelle jedes der mindestens zwei Konvergenzknoten (61) (201, 403, 503);
automatisches Aktualisieren eines gelernten statischen Routeneintrags entsprechend einer Hostadresse eines Zugangsknotens (62) durch jeden der mindestens zwei Konvergenzknoten (61) in Echtzeit gemäß einem gelernten ARP-Eintrag über jeden Zugangsknoten (62) (202); und
Melden, durch jeden der mindestens zwei Konvergenzknoten (61) gemäß einem dynamischen Routenprotokoll, eines aktuell gelernten statischen Routeneintrags entsprechend der Hostadresse des Zugangsknotens (62) an den Kernknoten (63) und die anderen Netzwerke (64) (203, 407, 507),
wobei das Einstellen der Verknüpfungsfunktion zwischen dem ARP-Modul und dem statischen Routenmodul an der Layer-3-Schnittstelle jedes der mindestens zwei Konvergenzknoten (61) und automatische Aktualisieren des gelernten statischen Routeneintrags entsprechend der Hostadresse des Zugangsknotens (62) durch jeden der mindestens zwei Konvergenzknoten (61) in Echtzeit gemäß dem gelernten ARP-Eintrag über jeden Zugangsknoten (62) umfasst:
Erfassen, durch das ARP-Modul jedes der mindestens zwei Konvergenzknoten (61), ob eine Layer-3-Schnittstelle in einem ARP-Eintrag über einen Zugangsknoten (62) sich im selben Netzwerksegment mit der Layer-3-Schnittstelle jedes der mindestens zwei Konvergenzknoten (61) befindet, und als Reaktion auf das Erfassen, dass die zwei Layer-3-Schnittstellen im selben Netzwerksegment sind, Lernen des ARP-Eintrags;
nach Lernen des ARP-Eintrags über den Zugangsknoten (62) automatisches Senden, durch das ARP-Modul, einer Nachricht bezüglich des ARP-Eintrags über den Zugangsknoten (62) an das statische Routenmodul, wobei der Zugangsknoten (62) im selben Netzwerksegment mit der Layer-3-Schnittstelle jedes der mindestens zwei Konvergenzknoten ist; und
Einstellen, durch das statische Routenmodul, des statischen Routeneintrags entsprechend der Hostadresse des Zugangsknotens (62) gemäß dem ARP-Eintrag in der Nachricht nach Erhalten der Nachricht.

2. Verfahren nach Anspruch 1, ferner umfassend: Aktualisieren, durch die mindestens zwei Konvergenzknoten (61), den Kernknoten (63) und die anderen Netzwerke (64) entsprechend dynamischer Routeneinträge in ihren jeweiligen dynamischen Routentabellen, nachdem der Kernknoten (63) und die anderen Netzwerke (64) die Meldung erhalten haben.

3. Verfahren nach Anspruch 1, wobei das automatische Aktualisieren eines gelernten statischen Routeneintrags entsprechend einer Hostadresse eines Zugangsknotens (62) durch jeden der mindestens zwei Konvergenzknoten (61) in Echtzeit gemäß einem gelernten ARP-Eintrag über jeden Zugangsknoten (62) wie folgt ist:
Erfassen, durch das ARP-Modul jedes der mindestens zwei Konvergenzknoten (61), ob ein neuer ARP-Eintrag hinzugefügt wird (404); wenn mindestens ein neu hinzugefügter ARP-Eintrag vorhanden ist, ferner Bestimmen, durch jeden der mindestens zwei Konvergenzknoten (61), ob eine Hostadresse im neu hinzugefügten ARP-Eintrag und eine Layer-3-Schnittstellenadresse jedes der mindestens zwei Konvergenzknoten (61) sich in einem selben Netzwerksegment befinden (405); wenn erfasst wird, dass sie sich im selben Netzwerksegment befinden, automatisches Hinzufügen, durch jeden der mindestens zwei Konvergenzknoten (61) gemäß dem neu hinzugefügten ARP-Eintrag, des statischen Routeneintrags entsprechend der Hostadresse des Zugangsknotens (62) (406).

4. Verfahren nach Anspruch 1, wobei das automatische Aktualisieren eines gelernten statischen Routeneintrags entsprechend einer Hostadresse eines Zugangsknotens (62) durch jeden der mindestens zwei Konvergenzknoten (61) in Echtzeit gemäß einem gelernten ARP-Eintrag über jeden Zugangsknoten (62) wie folgt ist:
Erfassen, durch das ARP-Modul jedes der mindestens zwei Konvergenzknoten (61), ob ein ARP-Eintrag gelöscht ist (504); wenn ein ARP-Eintrag gelöscht ist, ferner Bestimmen, durch jeden der mindestens zwei Konvergenzknoten (61), ob eine Hostadresse im gelöschten ARP-Eintrag und eine Layer-3-Schnittstellenadresse jedes der mindestens zwei Konvergenzknoten (61) sich im selben Netzwerksegment befinden (505); wenn bestimmt wird, dass sie sich im selben Netzwerksegment befinden, automatisches Löschen, durch jeden der mindestens zwei Konvergenzknoten (61) gemäß dem gelöschten ARP-Eintrag, des statischen Routeneintrags entsprechend der Hostadresse des Zugangsknotens (62)(506).

5. System zum Realisieren der Erreichbarkeit einer Hostroute in einem Zugangsring eines Pakettransportnetzwerks, PTN, **dadurch gekennzeichnet, dass** das System Folgendes umfasst: mindestens zwei Konvergenzknoten (61) und mindestens zwei Zugangsknoten (62), wobei ein Layer-2-Ringnetzwerk durch Verbindung zwischen den mindestens zwei Zugangsknoten (62) in einem Layer-2-Zugangsring und einem Heartbeat-Kabel zwischen den mindestens zwei Konvergenzknoten (61) gebildet ist, wobei jeder Zugangsknoten (62) im Layer-2-Zugangsring mit einer Hostadresse in einem selben Netzwerksegment mit einer Layer-3-Schnittstellenadresse eines Knotens, der mit einem Layer-3-Routenring konfiguriert ist, der die mindestens zwei Konvergenzknoten (61), einen Kernknoten (63) und andere Netzwerke (64) umfasst; ein Spanning-Tree-Protokoll, STP, an den mindestens zwei Zugangsknoten (62) des Layer-2-Zugangsrings konfiguriert ist und eine STP-transparente Übertragung an den mindestens zwei Konvergenzknoten (61) des Layer-2-Zugangsrings konfiguriert ist; Dual-Gateway-Standardrouten an den mindestens zwei Zugangsknoten (62) des Layer-2-Zugangsrings konfiguriert sind, zum Informations-Uplink zu den mindestens zwei Konvergenzknoten (61) und dann zum Kernknoten (63) und den anderen Netzwerken (64) durch die mindestens zwei Konvergenzknoten (61); Layer-3-Schnittstellen-Verbindung und ein Layer-3-Routenprotokoll an Knoten des Layer-3-Routenrings konfiguriert sind; und direkte Routen und statische Routen an den mindestens zwei Konvergenzknoten (61) in Verbindung mit dem Layer-2-Zugangsring in einem dynamischen Routenprotokoll neu konfiguriert werden,
wobei jeder der mindestens zwei Konvergenzknoten (61) für Folgendes konfiguriert ist:
Einstellen einer Verknüpfungsfunktion zwischen einem Address Resolution Protocol, ARP, -Modul, und einem statischen Routenmodul an einer Layer-3-Schnittstelle jedes der mindestens zwei Konvergenzknoten (61);
automatisches Aktualisieren eines gelernten statischen Routeneintrags entsprechend einer Hostadresse eines Zugangsknotens (62) in Echtzeit gemäß einem gelernten ARP-Eintrag über jeden Zugangsknoten (62), und
Melden, gemäß einem dynamischen Routenprotokoll, eines aktuell gelernten statischen Routeneintrags entsprechend der Hostadresse des Zugangsknotens (62) an den Kernknoten (63) und die anderen Netzwerke (64),
wobei jeder der mindestens zwei Konvergenzknoten (61) für das Einstellen der Verknüpfungsfunktion zwischen dem ARP-Modul und dem statischen Routenmodul an der Layer-3-Schnittstelle jedes der mindestens zwei Konvergenzknoten (61) und automatisches Aktualisieren des gelernten statischen Routeneintrags entsprechend der Hostadresse des Zugangsknotens (62) in Echtzeit gemäß dem gelernten ARP-Eintrag über jeden Zugangsknoten (62) konfiguriert ist durch:
Erfassen, durch das ARP-Modul jedes der mindestens zwei Konvergenzknoten (61), ob eine Layer-3-Schnittstelle in einem ARP-Eintrag über einen Zugangsknoten (62) im selben Netzwerksegment ist mit der Layer-3-Schnittstelle jedes der mindestens zwei Konvergenzknoten (61) und als Reaktion auf das Erfassen, dass die zwei Layer-3-Schnittstellen im selben Netzwerksegment sind, Lernen des ARP-Eintrags;
nach Lernen des ARP-Eintrags über den Zugangsknoten (62) automatisches Senden, durch das ARP-Modul, einer Nachricht bezüglich des ARP-Eintrags über den Zugangsknoten (62) an das statische Routenmodul, wobei der Zugangsknoten (62) sich im selben Netzwerksegment mit der Layer-3-Schnittstelle jedes der mindestens zwei Konvergenzknoten befindet; und
Einstellen, durch das statische Routenmodul, des statischen Routeneintrags entsprechend der Hostadresse des Zugangsknotens (62) gemäß dem ARP-Eintrag in der Nachricht nach Erhalten der Nachricht.

6. System nach Anspruch 5, ferner umfassend den Kernknoten (63) und die anderen Netzwerke (64), wobei
der Kernknoten (63) zum Erhalten des aktuell gelernten statischen Routeneintrags entsprechend der Hostadresse des Zugangsknotens (62) konfiguriert ist, der von jedem der mindestens zwei Konvergenzknoten (61) gemeldet wird, gemäß dem dynamischen Routenprotokoll; und
die anderen Netzwerke (64) zum Erhalten des aktuell gelernten statischen Routeneintrags entsprechend der Hostadresse des Zugangsknotens (62) konfiguriert sind, der von jedem der mindestens zwei Konvergenzknoten (61) gemeldet wird, gemäß dem dynamischen Routenprotokoll.

7. System nach Anspruch 6, wobei der Kernknoten (63) mindestens einen Kernknoten (63) umfasst.

8. System nach Anspruch 7, wobei
jeder der mindestens zwei Konvergenzknoten (61) ferner zum Aktualisieren eines entsprechenden dynamischen Routeneintrags in einer dynamischen Routentabelle konfiguriert ist, nachdem der Kernknoten (63) und die anderen Netzwerke (64) die Meldung erhalten;
der Kernknoten (63) ferner zum Aktualisieren eines entsprechenden dynamischen Routeneintrags in einer dynamischen Routentabelle konfiguriert ist, nachdem die anderen Netzwerke (64) und das Kernnetzwerk selber die Meldung erhalten; und
die anderen Netzwerke (64) ferner zum Aktualisieren entsprechender dynamischer Routeneinträge in dynamischen Routentabellen konfiguriert sind, nachdem der Kernknoten (63) und die anderen Netzwerke (64) selbst die Meldung erhalten haben.

9. System nach einem der Ansprüche 5 bis 8, wobei jeder der mindestens zwei Konvergenzknoten (61) ferner für Folgendes konfiguriert ist:
nachdem das ARP-Modul jedes der mindestens zwei Konvergenzknoten (61) erfasst, ob ein neuer ARP-Eintrag hinzugefügt ist oder ein ARP-Eintrag gelöscht ist und ein ARP-Eintrag als hinzugefügt oder gelöscht erfasst ist, Bestimmen, ob eine Hostadresse im hinzugefügten oder gelöschten ARP-Eintrag und eine Layer-3-Schnittstellenadresse jedes der mindestens zwei Konvergenzknoten (61) sich in einem selben Netzwerksegment befunden; und wenn bestimmt ist, dass sie sich im selben Netzwerksegment befinden, automatisches Hinzufügen oder Löschen des statischen Routeneintrags entsprechend der Hostadresse des Zugangsknotens (62).

## Revendications

1. Procédé pour réaliser l'accessibilité d'une route hôte dans un anneau d'accès d'un réseau de transport de paquets, PTN, **caractérisé en ce qu'**un réseau en anneau de couche deux est formé par interconnexion parmi au moins deux noeuds d'accès (62) dans un anneau d'accès de couche deux et un fil de battement de coeur entre au moins deux noeuds de convergence (61), dans lequel chaque noeud d'accès (62) dans l'anneau d'accès de couche deux est configuré avec une adresse hôte dans un même segment de réseau avec une adresse d'interface de couche trois d'un noeud connecté à un anneau de route de couche trois, qui comprend les au moins deux noeuds de convergence (61), un noeud central (63), et d'autres réseaux (64) ; un protocole Spanning Tree, STP, est configuré aux au moins deux noeuds d'accès (62) de l'anneau d'accès de couche deux, et une transmission transparente STP est configurée aux au moins deux noeuds de convergence (61) de l'anneau d'accès de couche deux ; des routes par défaut à double passerelle sont configurées aux au moins deux noeuds d'accès (62) de l'anneau d'accès de couche deux, pour liaison montante d'informations aux au moins deux noeuds de convergence (61) et puis au noeud central (63) et aux autres réseaux (64) par l'intermédiaire des au moins deux noeuds de convergence (61) ; une interconnexion d'interface de couche trois et un protocole de route de couche trois sont configurés à des noeuds de l'anneau de route de couche trois ; et des routes directes et des routes statiques sont reconfigurées aux au moins deux noeuds de convergence (61) connectés à l'anneau d'accès de couche deux dans un protocole de route dynamique ;
et que le procédé comprend :
le réglage d'une fonction de liaison entre un module à protocole de résolution d'adresse, ARP, et un module à route statique à une interface de couche trois de chacun des au moins deux noeud de convergence (61) (201, 403, 503) ;
la mise à jour automatique d'une entrée de route statique apprise correspondant à une adresse hôte d'un noeud d'accès (62) par chacun des au moins deux noeuds de convergence (61) en temps réel selon une entrée ARP apprise concernant chaque noeud d'accès (62) (202) ; et,
le rapport, par chacun des au moins deux noeuds de convergence (61) selon un protocole de route dynamique, d'une entrée de route statique apprise actuelle correspondant à l'adresse hôte du noeud d'accès (62) au noeud central (63) et aux autres réseaux (64) (203, 407, 507),
dans lequel le réglage de la fonction de liaison entre le module ARP et le module de route statique à l'interface de couche trois de chacun des au moins deux noeuds de convergence (61), et la mise à jour automatique de l'entrée de route statique apprise correspondant à l'adresse hôte du noeud d'accès (62) par chacun des au moins deux noeuds de convergence (61) en temps réel selon l'entrée ARP apprise concernant chaque noeud d'accès (62) comprend :
la détection, par le module ARP de chacun des au moins deux noeuds de convergence (61), qu'une interface de couche trois dans une entrée ARP concernant un noeud d'accès (62) est ou non dans le même segment de réseau avec l'interface de couche trois de chacun des au moins deux noeuds de convergence (61), et, en réponse à la détection que les deux interfaces de couche trois sont dans le même segment de réseau, l'apprentissage de l'entrée ARP ;
après l'apprentissage de l'entrée ARP concernant le noeud d'accès (62), l'envoi automatique, par le module ARP, d'un message connexe à l'entrée ARP concernant le noeud d'accès (62) au module de route statique, dans lequel le noeud d'accès (62) est dans le même segment de réseau avec l'interface de couche trois de chacun des au moins deux noeuds de convergence ; et
le réglage, par le module de route statique, de l'entrée de route statique correspondant à l'adresse hôte du noeud d'accès (62) selon l'entrée ARP dans le message après avoir reçu le message.

2. Procédé selon la revendication 1, comprenant en outre : la mise à jour, par les au moins deux noeuds de convergence (61), le noeud central (63) et les autres réseaux (64), d'entrées de routes dynamiques correspondantes dans leurs tables de routes dynamiques respectives, après que le noeud central (63) et les autres réseaux (64) reçoivent le rapport.

3. Procédé selon la revendication 1, dans lequel la mise à jour automatique d'une entrée de route statique apprise correspondant à une adresse hôte d'un noeud d'accès (62) par chacun des au moins deux noeuds de convergence (61) en temps réel selon une entrée ARP apprise concernant chaque noeud d'accès (62) est :
la détection, par le module ARP de chacun des au moins deux noeuds de convergence (61), qu'une nouvelle entrée ARP est ajoutée ou non (404) ; lorsqu'il y a une entrée ARP nouvellement ajoutée, la détermination supplémentaire, par chacun des au moins deux noeuds de convergence (61), qu'une adresse hôte dans l'entrée ARP nouvellement ajoutée et une adresse d'interface de couche trois de chacun des au moins deux noeuds de convergence (61) sont ou non dans un même segment de réseau (405) ; lorsqu'il est déterminé qu'elles sont dans le même segment de réseau, l'ajout automatique, par chacun des au moins deux noeuds de convergence (61) selon l'entrée ARP nouvellement ajoutée, de l'entrée de route statique correspondant à l'adresse hôte du noeud d'accès (62) (406).

4. Procédé selon la revendication 1, dans lequel la mise à jour automatique d'une entrée de route statique apprise correspondant à une adresse hôte d'un noeud d'accès (62) par chacun des au moins deux noeuds de convergence (61) en temps réel selon une entrée ARP apprise concernant chaque noeud d'accès (62) est :
la détection, par le module ARP de chacun des au moins deux noeuds de convergence (61), qu'une entrée ARP est supprimée ou non (504) ; lorsqu'une entrée ARP est supprimée, la détermination supplémentaire, par chacun des au moins deux noeuds de convergence (61), qu'une adresse hôte dans l'entrée ARP supprimée et une adresse d'interface de couche trois de chacun des au moins deux noeuds de convergence (61) sont ou non dans un même segment de réseau (505) ; lorsqu'il est déterminé qu'elles sont dans le même segment de réseau, la suppression automatique, par chacun des au moins deux noeuds de convergence (61) selon l'entrée ARP supprimée, de l'entrée de route statique correspondant à l'adresse hôte du noeud d'accès (62)(506).

5. Système pour réaliser l'accessibilité d'une route hôte dans un anneau d'accès d'un réseau de transport de paquets, PTN, **caractérisé en ce que** le système comprend :
au moins deux noeuds de convergence (61) et au moins deux noeuds d'accès (62), dans lequel un réseau en anneau de couche deux est formé par interconnexion parmi les au moins deux noeuds d'accès (62) dans un anneau d'accès de couche deux et un fil de battement de coeur entre les au moins deux noeuds de convergence (61), dans lequel chaque noeud d'accès (62) dans l'anneau d'accès de couche deux est configuré avec une adresse hôte dans un même segment de réseau avec une adresse d'interface de couche trois d'un noeud connecté à un anneau de route de couche trois, qui comprend les au moins deux noeuds de convergence (61), un noeud central (63), et d'autres réseaux (64) ; un protocole Spanning Tree, STP, est configuré aux au moins deux noeuds d'accès (62) de l'anneau d'accès de couche deux, et une transmission transparente STP est configurée aux au moins deux noeuds de convergence (61) de l'anneau d'accès de couche deux ; des routes par défaut à double passerelle sont configuré aux au moins deux noeuds d'accès (62) de l'anneau d'accès de couche deux, pour liaison montante d'informations aux au moins deux noeuds de convergence (61) et puis au noeud central (63) et aux autres réseaux (64) par l'intermédiaire des au moins deux noeuds de convergence (61) ; une interconnexion d'interface de couche trois et un protocole de route de couche trois sont configurés à des noeuds de l'anneau de route de couche trois ; et des routes directes et des routes statiques sont reconfigurées aux au moins deux noeuds de convergence (61) connectés à l'anneau d'accès de couche deux dans un protocole de route dynamique,
dans lequel chacun des au moins deux noeuds de convergence (61) est configuré pour :
le réglage d'une fonction de liaison entre un module à protocole de résolution d'adresse, ARP, et un module à route statique à une interface de couche trois de chacun des au moins deux noeud de convergence (61) ;
la mise à jour automatique d'une entrée de route statique apprise correspondant à une adresse hôte d'un noeud d'accès (62) en temps réel selon une entrée ARP apprise concernant chaque noeud d'accès (62), et
le rapport, selon un protocole de route dynamique, d'une entrée de route statique apprise actuelle correspondant à l'adresse hôte du noeud d'accès (62) au noeud central (63) et aux autres réseaux (64),
dans lequel chacun des au moins deux noeuds de convergence (61) est configuré pour le réglage de la fonction de liaison entre le module ARP et le module de route statique à l'interface de couche trois de chacun des au moins deux noeuds de convergence (61), et la mise à jour automatique de l'entrée de route statique apprise correspondant à l'adresse hôte du noeud d'accès (62) en temps réel selon l'entrée ARP apprise concernant chaque noeud d'accès (62) par :
la détection, par le module ARP de chacun des au moins deux noeuds de convergence (61), qu'une interface de couche trois dans une entrée ARP concernant un noeud d'accès (62) est ou non dans le même segment de réseau avec l'interface de couche trois de chacun des au moins deux noeuds de convergence (61), et en réponse à la détection que les deux interfaces de couche trois sont dans le même segment de réseau, l'apprentissage de l'entrée ARP ;
après l'apprentissage de l'entrée ARP concernant le noeud d'accès (62), l'envoi automatique, par le module ARP, d'un message connexe à l'entrée ARP concernant le noeud d'accès (62) au module de route statique, dans lequel le noeud d'accès (62) est dans le même segment de réseau avec l'interface de couche trois de chacun des au moins deux noeuds de convergence ; et
le réglage, par le module de route statique, de l'entrée de route statique correspondant à l'adresse hôte du noeud d'accès (62) selon l'entrée ARP dans le message après avoir reçu le message.

6. Système selon la revendication 5, comprenant en outre le noeud central (63) et les autres réseaux (64), dans lequel
le noeud central (63) est configuré pour la réception de l'entrée de route statique apprise actuelle correspondant à l'adresse hôte du noeud d'accès (62) rapportée par chacun des au moins deux noeuds de convergence (61), selon le protocole de route dynamique ; et
les autres réseaux (64) sont configurés pour la réception de l'entrée de route statique apprise actuelle correspondant à l'adresse hôte du noeud d'accès (62) rapportée par chacun des au moins deux noeuds de convergence (61), selon le protocole de route dynamique.

7. Système selon la revendication 6, dans lequel le noeud central (63) comprend au moins un noeud central (63).

8. Système selon la revendication 7, dans lequel
chacun des au moins deux noeuds de convergence (61) est en outre configuré pour la mise à jour d'une entrée de route dynamique correspondante dans une table de routes dynamiques après que le noeud central (63) et les autres réseaux (64) reçoivent le rapport ;
le noeud central (63) est en outre configuré pour la mise à jour d'une entrée de route dynamique correspondante dans une table de routes dynamiques après que les autres réseaux (64) et le réseau central lui-même reçoivent le rapport ; et
les autres réseaux (64) sont en outre configurés pour la mise à jour d'entrée de routes dynamiques correspondantes dans des tables de routes dynamiques après que le noeud central (63) et les autres réseaux (64) eux-mêmes reçoivent le rapport.

9. Système selon l'une quelconque des revendications 5 à 8, dans lequel chacun des au moins deux noeud de convergence (61) est en outre configuré pour :
après que le module ARP de chacun des au moins deux noeuds de convergence (61) détecte qu'une nouvelle entrée ARP est ajoutée ou non ou qu'une entrée ARP est supprimée ou non et qu'il est détecté qu'une entrée ARP est ajoutée ou supprimée, la détermination qu'une adresse hôte dans l'entrée ARP ajoutée ou supprimée et qu'une adresse d'interface de couche trois de chacun des au moins deux noeuds de convergence (61) sont ou non dans un même segment de réseau ; et lorsqu'il est déterminé qu'elles sont dans le même segment de réseau, l'ajout ou la suppression automatique de l'entrée de route statique correspondant à l'adresse hôte du noeud d'accès (62).
